# EUROPEAN PATENT SPECIFICATION

(11) **EP 1 520 692 B1**
(45) Date of publication and mention of the grant of the patent: **25.03.2009**
(21) Application number: 04022164.0
(22) Date of filing: 17.09.2004
(51) Int. Cl.: B32B 37/10, B32B 5/02

(54) **Vacuum lamination apparatus**
Vorrichtung zur Vakuumlaminierung
Appareil de lamination sous vide

(30) Priority: 30.09.2003 JP 2003340345; 07.01.2004 JP 2004001671
(43) Date of publication of application: 06.04.2005
(73) Proprietor: Fuji Electric Systems Co., Ltd., Tokyo 141-0032 (JP)
(72) Inventor: Yokoyama, Yasuhiro Fuji Electric Holdings Co. Ltd., Kawasaki 210-0858 (JP)
(74) Representative: Hoffmann, Eckart

(56) References cited:
- FR-A- 2 814 109
- GB-A- 2 245 215
- US-A- 3 666 600
- US-A- 6 007 650

## Description

The present invention generally relates to a vacuum lamination apparatus, in particular to a vacuum lamination apparatus for processing lamination materials such as components of a solar cell module by a vacuum lamination process.

Mass consumption of fossil fuel since the Industrial Revolution has been worsening the global environment due to air pollution and global warming by CO₂ increase. Recently, people's consciousness of environmental problems is rising in the global scale.

In this circumstance, the energy source of solar cells is deemed promising since this energy is safe, easy to handle, and clean. There are several types of solar cells; important types are single crystal silicon solar cells, polycrystalline silicon solar cells, amorphous silicon solar cells, and compound semiconductor solar cells. Among these solar cells, amorphous silicon solar cells allow producing flexible solar cells with relatively low cost and large area solar cells, and have begun to be applied to new areas recently.

Because solar cell modules are generally used exposed to open air, durability against temperature, humidity and external pressure must be improved for providing reliable devices. A technology to meet the requirements is a vacuum lamination process.

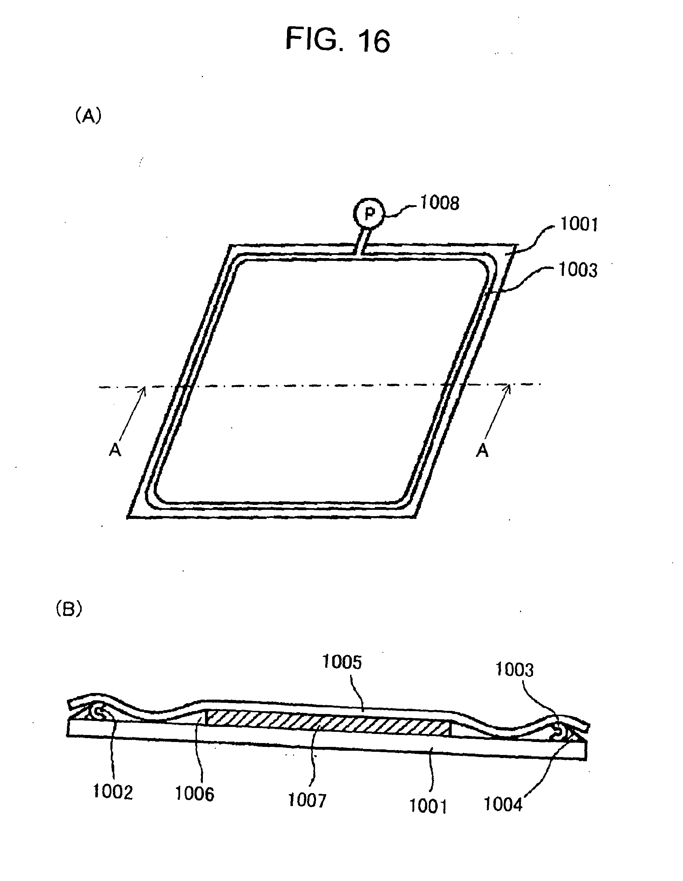

Fig. 16 is a schematic drawing of a conventional vacuum lamination apparatus, in which (A) is a perspective view and (B) is a sectional view along line A-A in (A). The conventional vacuum lamination apparatus comprises a base plate 1001, a tube 1003 arranged in a ring shape on the base plate and provided with evacuation holes 1002 opened on the inside wall of the tube, and a vacuum pump 1008. The tube 1003 is fixed onto the base plate 1001 with fixing material 1004. A cover sheet 1005 covering the whole ring shaped tube 1003 forms a processing space 1006 for a lamination process.

In the vacuum lamination process, first, sheets of components 1007 of a solar cell module for constructing a solar cell module are arranged and layered in the vacuum lamination apparatus. Then, a so-called degassing process is conducted, in which air between the materials is removed by evacuation using the vacuum pump 1008. Continuing the evacuation, the materials are heated up to a temperature at which sealant materials contained in the components of the solar cell module can be cross-linked or cured, and held at this temperature for a predetermined time until the sealant materials are fully cured. After that, the materials are cooled down and the vacuum pump is stopped returning to the atmospheric pressure.

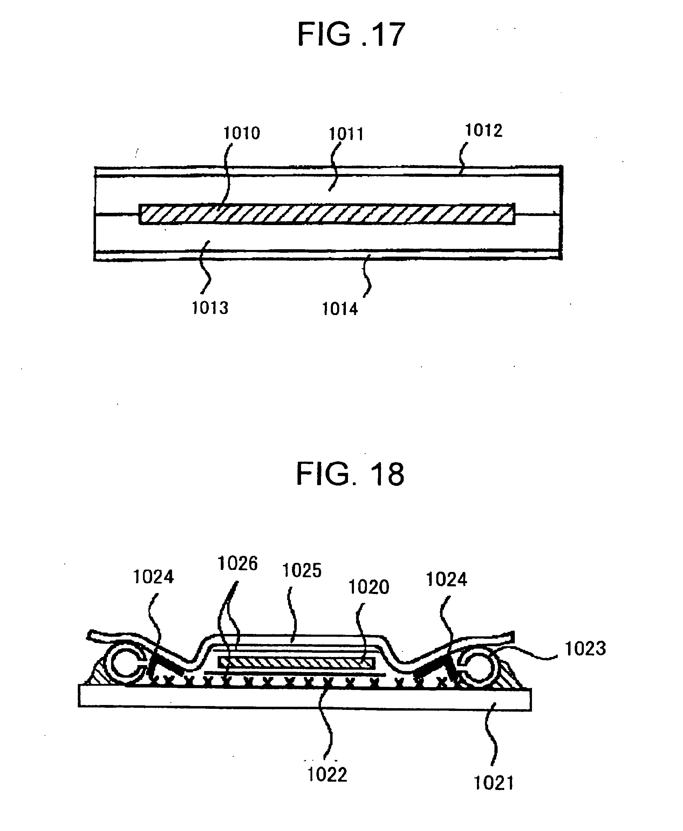

Fig. 17 is a schematic drawing of a solar cell module manufactured by using a vacuum lamination apparatus. On a front surface of a photovoltaic element 1010, a thermo-adhesive front surface sealant material 1011 and a top surface covering member (surface protection film) 1012 are sequentially formed. On a rear surface of the photovoltaic element 1010, a thermo-adhesive rear surface sealant material 1013 and rear surface reinforcing member 1014 are sequentially formed.

In a conventional vacuum lamination apparatus as shown in Fig. 16, an acute-angled bend occurs in the cover sheet 1005 at the contact part with the tube in the evacuation process. Continuing operation in such a state is prone to generate cracks at the acute-angled parts in the cover sheet 1005 due to long term temperature stress. Resulting leakage causes insufficient degassing of the materials between the components 1007 of the solar cell module, leaving air bubbles in the solar cell module raising a problem of external appearance defects.

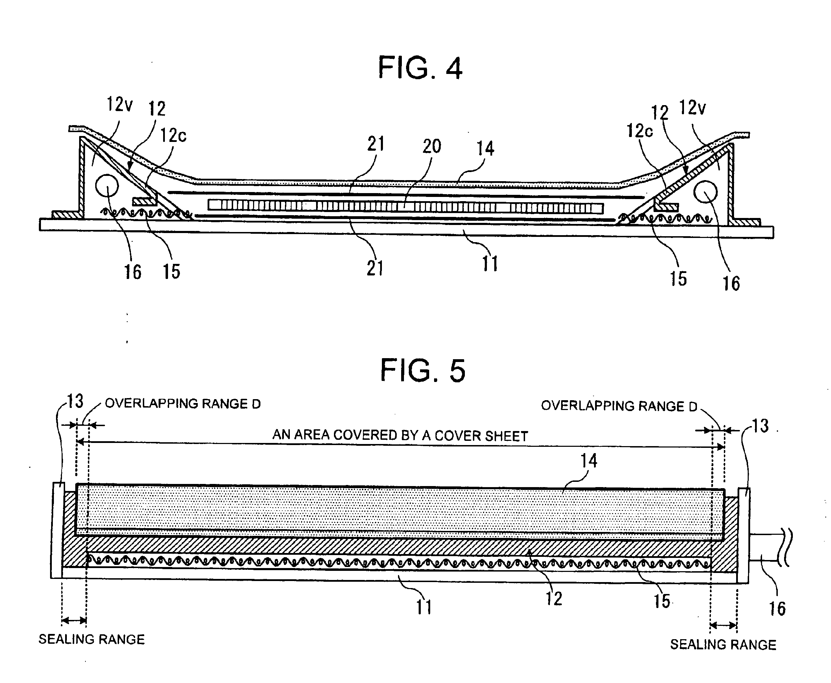

To solve this problem, a technique has been disclosed (see, for example, US-A-6 007 650 or JP-A-09-051111 (paragraph numbers [0025], [0026], and Fig. 5)), in which an acute angle structure of the cover sheet is mitigated by means of provision of a buffer member along the inner side of the tube. Fig. 18 is a schematic sectional view of a conventional vacuum lamination apparatus provided with a buffer member along inside of the tube.

Components 1020 of a solar cell module are sandwiched by materials 1026 for preventing escape of filler material filling the space around the components, and placed on the base plate 1021 through a net 1022 for forming an air flow layer. A buffer member 1024 with a cross-section of the character L, for example, is provided along the inner side of the tube 1023 placed in a ring form as shown in Fig. 18. A cover sheet 1025 covers the whole tube 1023, and degassing by evacuation is conducted.

The conventional vacuum lamination apparatus as shown in Fig. 16 or Fig. 18, however, raises a problem when the vacuum lamination apparatus is scaled-up corresponding to scale-up of a solar cell module. In that case, rigidity of the apparatus as a whole must be enhanced by intensifying adhesion between the base plate and the tube. Even if the base plate and the tube are firmly integrated together by welding, for example, satisfactory rigidity of the apparatus as a whole can hardly be attained because a member with a tube form is generally poor in flexural rigidity.

Since a buffer member for protecting the cover sheet is also required, the number of parts and the number of manufacturing steps also increase, resulting in cost-up of the apparatus. The exhaust holes of the tube are hard to be worked and further, the number of the holes that can be bored is limited. As a result, the evacuation performance is degraded.

The object of the present invention is to provide a vacuum lamination apparatus suitable for manufacturing a solar cell module that is inexpensive and achieves a high productivity. A further object of the invention is to provide a vacuum lamination apparatus that assures sealing by a cover sheet and suppresses air leakage, thereby performing a high quality lamination process.

This further object is achieved by a vacuum lamination apparatus as claimed in claim 8. Preferred embodiments of the invention are subject-matter of the dependent claims.

In one embodiment of the vacuum lamination apparatus, an evacuation space is formed with an evacuation port that is a gap formed in inner side of the evacuation structure that is fixed on either opposing side of the base plate, and hermetically sealed against the base plate and the end plates. Evacuation in a lamination process is conducted through these evacuation spaces.

In one embodiment of the vacuum lamination apparatus, a processing space for vacuum lamination process is formed by the cover sheet, and air in the processing space is evacuated through the evacuation ports of the evacuation structures. In a vacuum lamination process on a lamination material, the guides bend the two peripheral side regions of the cover sheet without the evacuation structure and enhance geometrical moment of inertia of the cover sheet.

Therefore, adhesiveness of the cover sheet enhances.

Because in a vacuum lamination apparatus according to the present invention, an evacuation space is formed by disposing evacuation structures with approximately triangular cross-section at opposing sides of a base plate, evacuation is conducted in a rigid structure. Therefore, the apparatus of the invention copes with scale-up of the laminate modules and improves productivity. In addition, the structure is simple, resulting in lowered cost.

In a preferred embodiment, guides are arranged on the base plate at both sides of the lamination material and bridge opposing evacuation structures. The guides bend two peripheral side regions of the cover sheet in a vacuum lamination process and enhance geometrical moment of inertia of the cover sheet. As a result, adhesiveness of the cover sheet enhances and air leakage is suppressed allowing performing high quality vacuum lamination process.

Preferred embodiments of the present invention will be described in the following with reference to the accompanying drawings, in which:
- Fig. 1: is a perspective view of a first embodiment of a vacuum lamination apparatus according to the present invention;
- Fig. 2: is a sectional view along line A1-A1 in Fig. 1;
- Fig. 3: is a sectional view along line A2-A2 in Fig. 1;
- Fig. 4: is a sectional view along line A1-A1 in Fig. 1 showing a lamination process;
- Fig. 5: is a sectional view along line A2-A2 in Fig. 1 showing a lamination process;
- Fig. 6: shows an example of a lamination module manufacturing system to which a vacuum lamination apparatus is applied;
- Fig. 7: is a sectional view showing a vacuum lamination process in a vacuum lamination apparatus of a first embodiment of the invention;
- Fig. 8: is a sectional view along line A-A in Fig. 7;
- Fig. 9: is a perspective view of a vacuum lamination apparatus of a second embodiment of the present invention;
- Fig. 10: is a sectional view along line A-A in Fig. 9;
- Fig. 11: is a sectional view along line B-B in Fig. 9;
- Fig. 12: shows a schematic construction of components of a solar cell module that undergoes a vacuum lamination process using a vacuum lamination apparatus according to the present invention;
- Fig. 13: is a sectional view showing a vacuum lamination process in a vacuum lamination apparatus of the second embodiment of the invention;
- Fig. 14: is another sectional view showing a vacuum lamination process in a vacuum lamination apparatus of the second embodiment of the invention;
- Fig. 15: shows a bend formed in a peripheral region of a cover sheet;
- Fig 16: shows a schematic view of a conventional vacuum lamination apparatus, in which (A) is a perspective view and (B) is a sectional view along line A-A in (A);
- Fig. 17: shows a schematic cross-section of a solar cell module manufactured by a vacuum lamination apparatus of Fig. 16; and
- Fig. 18: is a schematic sectional view of a conventional vacuum lamination apparatus that is provided with buffers along inside of a tube.

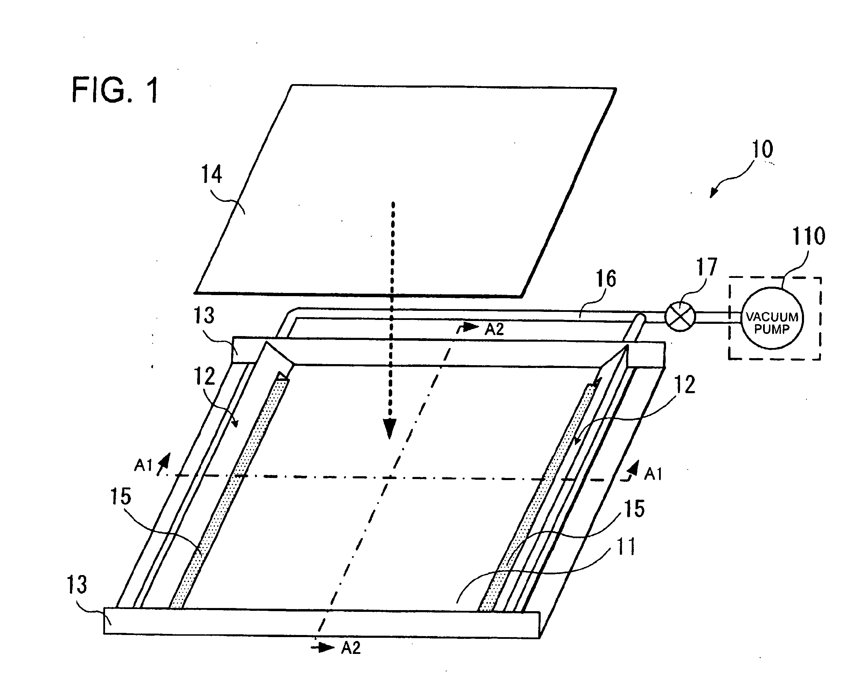

Fig. 1 is a perspective view of a vacuum lamination apparatus (VL apparatus) of a first embodiment of the invention. A vacuum lamination apparatus 10 comprises a base plate 11, evacuation structures 12, end plates 13, a cover sheet 14, spacers 15, exhaust port 16, and a valve 17.

Base plate 11 is a base of the VL apparatus 10 and is a member for placing a laminate module to be lamination processed. The base plate needs heat resistance, rigidity, and light weight. Material for the base plate 11 is principally selected from metals and alloys including iron or aluminum, among which stainless steel is favorable from the view points of weldability and corrosion resistance. While small thickness is desired to reduce the heat capacity and weight, since excessively small thickness results in poor rigidity, the thickness is preferably in the range of about 1.0 to 2.0 mm.

An evacuation structure 12 has a triangular cross-section with a plurality of faces. The evacuation structure 12 comprises principally a face perpendicular to the base plate 11 and a face inclined at a predetermined angle relative to the base plate 11. The evacuation structures 12 are arranged at two opposing sides of the base plate 11 with each of the inclined faces facing towards the center of the base plate.

Calling the side of the inclined face the inside of the evacuation structure 12 and the side of the face perpendicular to the base plate 11 the outside of the evacuation structure 12, an outer face of the evacuation structure 12 contacting the base plate 11 is fixed to the base plate 11 in a hermetic condition. The evacuation structure 12 has a gap with a constant distance to the base plate 11. The evacuation structure 12 needs heat resistance, rigidity, and light weight. Stainless steel is principally used for the material of the evacuation structure.

End plate 13 is fixed to the opposing ends of the evacuation structures 12 in a hermetic condition, and seal the ends of the evacuation structure 12. Each end plate 13 preferably connects two evacuation structures 12 to secure rigidity of the VL apparatus 10.

Cover sheet 14 covers the base plate 11 and the evacuation structures 12, and forms a space for the lamination process (hereinafter called "processing space"). The cover sheet 14 needs elasticity, heat resistance, flexibility, light weight, and air tightness in evacuation process. The material used is generally a silicone resin, which is an elastic material. This embodiment uses a silicone rubber (thickness: 2 mm, hardness: 50 Hs JIS A (measured in accordance with Japanese Industrial Standard (JIS) 6301), general use type silicone resin, manufactured by Tigers Polymer Corporation).

Spacer 15 is disposed in the gap of each evacuation structure 12, to conserve this gap in the lamination process. Exhaust port 16 is a conduit for exhausting air from the VL apparatus 10, and terminates at a valve 17. The VL apparatus 10 is connected to an external vacuum pump 110 via a vent of the valve 17.

In the VL apparatus 10 having the above described construction, an evacuation space is formed with an evacuation port that is a gap formed on the inner side of the evacuation structure 12 that is fixed on either opposing side of the base plate 11, and hermetic against the base plate 11 and the end plates 13. The exhaust port 16 is inserted to this evacuation space through the end plate 13. In a lamination process, air is exhausted from the processing space through the gap to the evacuation space. From the evacuation space, air is exhausted out through the exhaust port 16.

Because the evacuation structures 12 are arranged at the opposing sides of the base plate 11 and have triangular cross-sections forming the evacuation spaces 12v in the evacuation structure, lamination process is conducted in a simple and rigid structure.

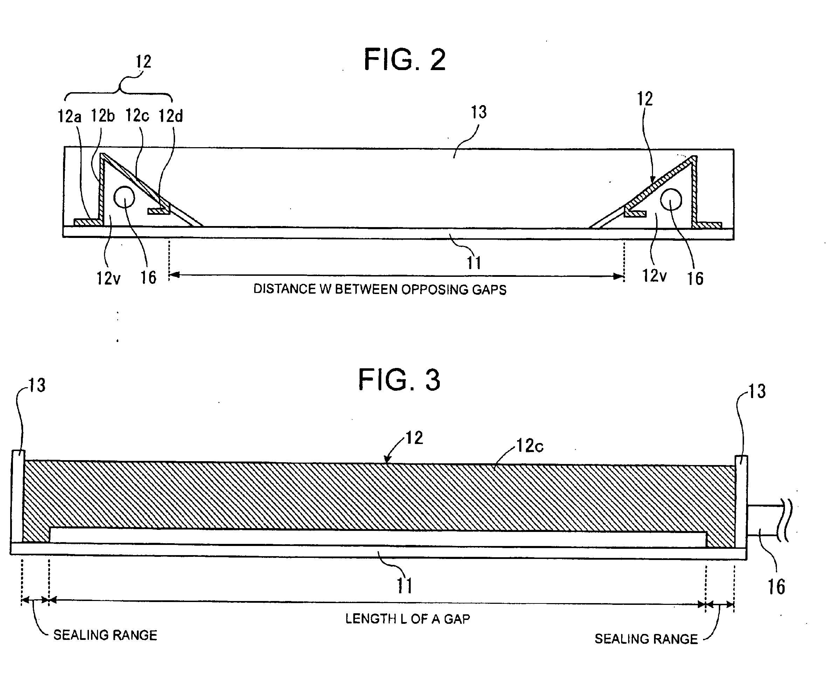

The following describes details of the structure of the evacuation structure 12 and the evacuation space 12v referring to sectional views of Fig. 1. Fig. 2 is a sectional view along line A1-A1 of Fig. 1. Fig. 3 is a sectional view along line A2-A2 of Fig. 1. Figs. 2 and 3 do not show spacers 15.

As shown in Fig. 2, the evacuation structure 12 consists of a first bent face 12a, a second bent face 12b, a third bent face 12c, and a fourth bent face 12d. The first bent face 12a and the second bent face 12b constitute an outer portion of the evacuation structure 12, while the third bent face 12c and the fourth bent face 12d constitute an inner portion of the evacuation structure 12.

Bending into the first bent face 12a and the second bent face 12b is conducted such that the second bent face 12b is perpendicular to the base plate 11. Bending the second bent face 12b with this angle improves rigidity of the VL apparatus 10.

The third bent face 12c is bent with an elevation angle of 30 degrees with reference to the base plate 11 in this embodiment. The fourth bent face 12d is bent leaving a predetermined gap between the base plate 11 and the edge of the fold between the third bent face 12c and the fourth bent face 12d. This bending is conducted having the gap of about 2 mm in this embodiment.

As shown in Fig. 3, the fourth bent face 12d is bent from the third bent face 12c leaving a predetermined length of sealing ranges on both sides of the gap, the sealing range preventing air exhaust. The sealing range is 10 mm long in this embodiment.

The evacuation structure 12 having the above described structure is fixed to the base plate 11 by butt resistance welding between the first bent face 12a and the outer periphery of the base plate 11. Spot welding is conducted at every 100 mm in this embodiment. By applying a spot welding method to fix the evacuation structure 12 to the base plate 11, time for welding is saved, and cost of manufacturing the VL apparatus 10 is lowered.

Spot welding employing TIG (tungsten inert gas) welding is conducted between the evacuation structure 12 and end plates 13, and between the base plate 11 and the end plates 13. Every spot welded part is sealed off with sealant. Silicone sealant "KE45" (a product of Shin-Etsu Silicone Co., Ltd., "KE45" is a trademark of the Company.) is used for the sealant in this embodiment. Portions of the evacuation structure 12 and the base plate 11 for silicone sealant application are preferably degreased prior to sealant application. An airtight structure using the sealant avoids air leakage in the evacuation process, to improve reliability of the VL apparatus 10.

An airtight structure is constructed by fixing the evacuation structures 12 to the base plate 11 and to the end plates 13, and by sealing with sealant the joints between the evacuation structures 12 and the base plate 11, between the evacuation structures 12 and the end plates 13, and between the base plate 11 and the end plates 13. The airtight structure forms an evacuation space 12v, as shown in Fig. 2, in each evacuation structure 12 fixed on the two opposing sides of the base plate 11. An evacuation port of the evacuation space is the gap between the base plate 11 and the folded edge of the third bent face 12c and the fourth bent face 12d.

Shapes of solar cell modules are being elongate, particularly in the modules for roofing materials. Accordingly, the processing space is also elongate. Therefore, the evacuation structures in which the evacuation space 12v is formed are preferably arranged at the opposing longer sides of the base plate 11.

In other words, provided W is the distance between the opposing gaps (see Fig. 2) and L is the length of the gap (see Fig. 3), it is preferable to satisfy the relation L ≥ W. Under this condition, the evacuation spaces 12v are located on the longer sides of the base plate 11, and enough evacuation can be conducted for lamination process even though the evacuation spaces 12v are provided only on the two opposing sides.

The following will describe a lamination process in the VL apparatus 10, in which Fig. 4 is a sectional view along line A1-A1 of Fig. 1 showing a lamination process, and Fig. 5 is a sectional view along line A2-A2 of Fig. 1 showing a lamination process.

First, an air permeable sheet 21 is placed on the base plate 11, as shown in Fig. 4. Components of a laminate module that is a solar cell module in this embodiment are put thereon. Another air permeable sheet 21 is put thereon. Spacers 15 are laid in the gaps between the evacuation structures 12 and the base plate 11. The spacers 15 are plain weave wire net of stainless steel with a wire diameter of 0.9 mm and mesh number of 3 in this embodiment. A processing space is formed by covering the base plate 11 and the evacuation structure 12 with the cover sheet 14.

As shown in Fig. 5, the cover sheet 14 is arranged to overlap in an overlapping range D the sealing range on each end of the evacuation structures 12. The overlapping range D is at least 2 mm in this embodiment. In Fig. 5, components 20 of the solar cell module and the air permeable sheets 21 are omitted.

Lamination process is performed in the VL apparatus 10 having the above described structure using the external vacuum pump 110. The cover sheet 14 pushes the components 20 of the solar cell module towards the base plate 11 and promotes degassing of the materials of the components 20 of the solar cell module. While vacuum differential pressure generated by this degassing causes deflection of the third bent face 12c of the evacuation structure 12, the spacer 15 prevents the deflected third bent face 12c and the base plate 11 from contacting each other and avoids blockage of air flow in the evacuation process. The air exhausted through the spacer 15 is vent outward from the evacuation space 12v through the exhaust port 16 that is inserted to the evacuation space 12v.

Provision of the spacers 15 for maintaining the gap between the evacuation structures 12 and the base plate 11 secures air exhaust through the gaps in the evacuation process, and avoids degradation of evacuation performance.

Use of the wire net for the spacers 15 maintains the air evacuation performance even when the gaps are narrowed. By reserving the overlapping range D with the sealing range and the area of the evacuation structures 12 covered by the cover sheet 14 to be not smaller than 2 mm, the cover sheet 14 covers the gap between each evacuation structure 12 and the base plate 11 without failure in the evacuation process. Thus, reliability of the VL apparatus 10 is improved.

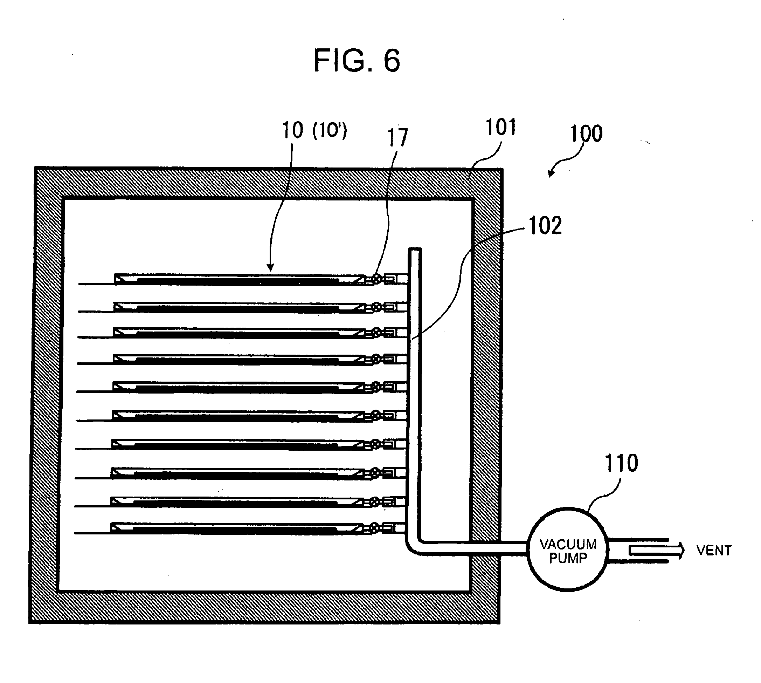

Next, a procedure will be described to manufacture a laminate module by a laminate module manufacturing system to which a VL apparatus 10 according to the present invention is applied. Actually manufactured results will be also described. In this embodiment, the laminate module is a solar cell module. Fig. 6 shows an example of a lamination module manufacturing system to which the VL apparatus is applied.

Ten VL apparatuses 10 are horizontally arranged in a hot gas convection furnace 101 in the manufacturing system 100. The vent of the valve 17 of each VL apparatus 10 is connected to a manifold 102, which in turn connects to a vacuum pump 110, to evacuate all the VL apparatuses 10 together at one time.

The procedure for manufacturing solar cell modules using this manufacturing system 100 is as follows. First, in each VL apparatus 10, an air permeable sheet 21 is laid on the base plate 11, as in Fig. 4, then, components 20 of a solar cell module are placed thereon, and another air permeable sheet 21 is put thereon. A cover sheet 14 is placed to make an overlapping range D of the area covered by the cover sheet 14 and the sealing range of the evacuation structure 12 not smaller than 2 mm. Thus, a processing space is formed in each VL apparatus 10.

After arranging each member, the vent of the valve 17 of each VL apparatus 10 is connected to the manifold 102. Then, the vacuum pump 110 starts to evacuate each processing space of the vacuum lamination devices 10 and degasses air between the components 20 of the solar cell module disposed in each VL apparatus 10.

While degassing by the vacuum pump 110, the apparatuses are heated up to a temperature (about 150°C) at which filler material contained in the components 20 of the solar cell module starts to cure, and are held at this temperature for about 30 min until completion of curing. After closing the valve 17 of the VL apparatuses 10, the VL apparatuses 10 are taken out from the hot gas convection furnace 22 maintaining the vacuum, and cooled. After that, the valve 17 is opened and the processing space of each VL apparatus is returned to atmospheric pressure.

Following this procedure, ten sheets of solar cell modules with a size of 500 x 2,000 mm have been manufactured at one time. As described above, since an evacuation space 12v is formed in an evacuation structure 12 that is arranged on each of the two opposing sides of the base plate 11 and has a triangular cross-section, rigidity of a VL apparatus 10 as a whole is improved as compared with the conventional tubular member. Accordingly, a large-sized solar cell module, such as with a dimension of 500 x 2,000 mm, can be manufactured employing a VL apparatus 10. Therefore, productivity of solar cell modules is enhanced. Costs are also reduced because of simple structure thereof.

In the above description, the evacuation structure 12 has a triangular cross-section. However a nearly triangular shape may also be taken, that is a trapezoid in which the top edge is deformed to a flat plane. The second bent face 12b is bent perpendicular to the base plate 11 in the above description. However, the bent face can be bent inwardly slanted with respect to the base plate 11.

The end plates 13 that hermetically fix both ends of the evacuation structures 12 are independent members in the above description. Alternatively, the end plates 13 can be formed by bending shorter edges of the base plate 11. Because the base plate 11 and the end plate 13 have a single integral structure in this case, the number of steps for manufacturing the VL apparatus 10 is reduced.

The spacer 15 that secures the gap between an evacuation structure 12 and the base plate 11 is a wire net in the above description. The wire net can be replaced by another material as long as the material secures the gap and allows air flow.

The manufacturing system 100 is used for manufacturing solar cell modules in the above description. The manufacturing system can also be used for manufacturing other types of laminate modules.

While the VL apparatus of the first embodiment of the invention has a lot of advantages over the conventional apparatus as described above, the apparatus of the first embodiment involves a risk of air leakage as described below. The risk can be eliminated by the second embodiment according to the present invention. The risk of air leakage involved in the first embodiment will be described before description of the second embodiment.

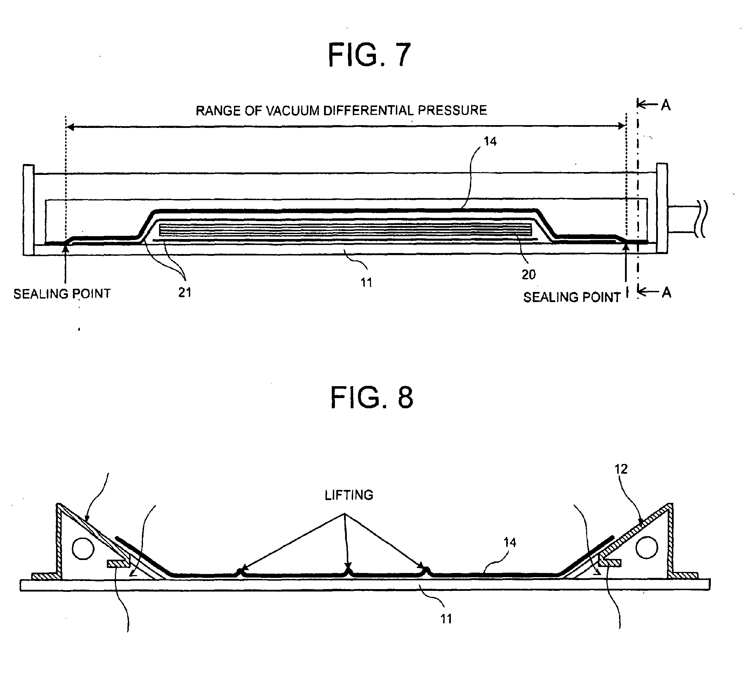

In the VL apparatus of the first embodiment, the cover sheet on the two peripheral sides without the evacuation structures contacts with the flat base plate to hold the processing space in an airtight condition. Fig. 7 is a sectional view showing the VL apparatus of the first embodiment in a lamination process, and Fig. 8 is a sectional view along line A-A in Fig. 7.

In a lamination process with the lamination apparatus of the first embodiment as shown in Fig. 7, two peripheral side areas of the cover sheet 14 come into contact with the flat base plate 11 to hold the processing space in an airtight condition. Here, the cover sheet 14 makes close contact with the base plate 11 only at the inner edge of the contact area with vacuum differential pressure, while outside of the inner edge it makes loose contact in the atmospheric pressure. The close contact edge works as a seal point. The region spanning between the seal points generated at the two peripheral sides of the cover sheet 14 develops vacuum differential pressure.

With heating the VL apparatus after start of evacuation, the cover sheet 14 expands by the heat. In the two peripheral sides of the cover sheet 14, as shown in Fig. 8, left and right ends of each peripheral side in the Fig. 8 are constrained by the ascending parts of the evacuation structures. As a result, some spots in the thermally expanded peripheral side region lift up from the base plate 11 and adhesiveness in the seal point deteriorates.

However, geometrical moment of inertia of the cover sheet 14 in the above structure is not enough to suppress the lifting at some spots along the seal point because the cover sheet 14 contacts with the flat base plate 11. Therefore, leakage through the lifted seal points causes degradation in the vacuum of the processing space. Further, the cover sheet 14, being composed of an elastic material such as silicone resin, can not be formed beforehand into a shape that exhibits a desired value of geometrical moment of inertia.

A VL apparatus of the second embodiment of the invention avoids such leakage and performs high quality lamination.

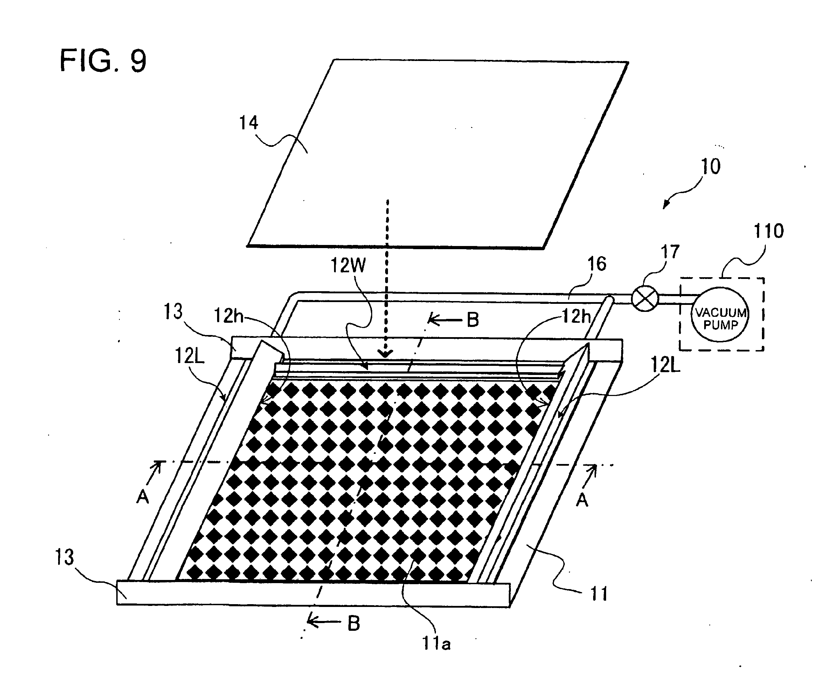

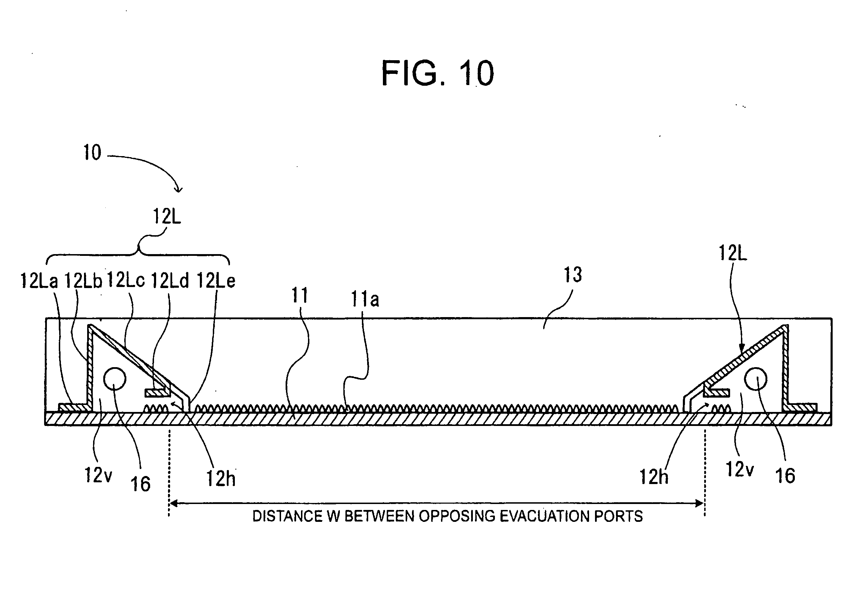

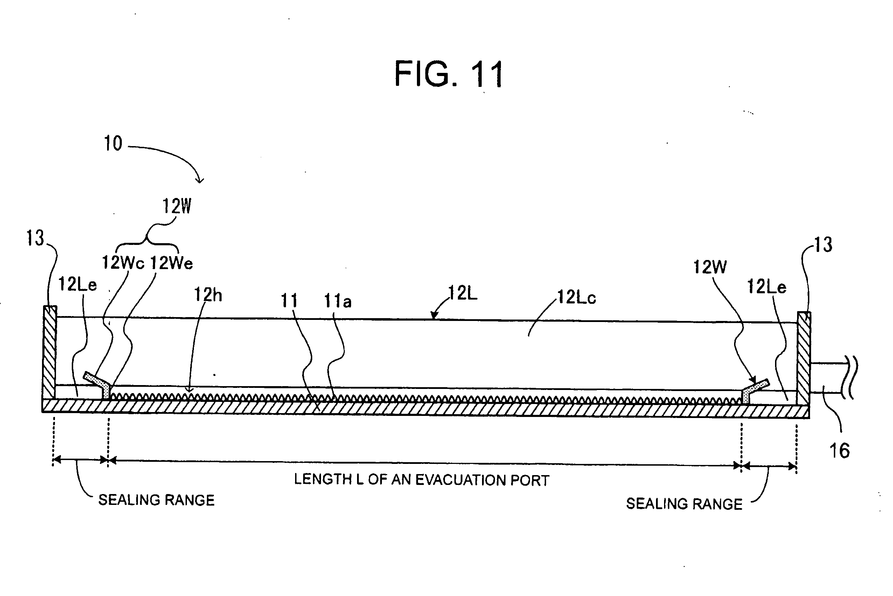

The second embodiment of the invention will be described in detail with reference to Figs. 9 to 15 below. Fig. 9 is a perspective view of an exemplary VL apparatus of the second embodiment according to the invention. Fig. 10 is a sectional view along line A-A of Fig. 9, and Fig. 11 is a sectional view along line B-B of Fig. 9.

This example of the second embodiment of a VL apparatus 10' of the invention comprises the base plate 11 for placing a lamination material (which is components of a solar cell module in the following description), the cover sheet 14 that covers the lamination material and forms a processing space for vacuum lamination process, evacuation structures 12L arranged on the base plate 11 on both sides of the lamination material and having each an evacuation port 12h in the side of the evacuation structures facing each other for evacuating a processing space, slender slab-like members 12W arranged opposing each other on the base plate 11 on both sides of the lamination material and bridging the two evacuation structures 12L, and end the plates 13 sealing each end of the evacuation structures 12L. The VL apparatus 10' further comprises an exhaust port 16 that is a path connecting the evacuation structure 12L to a vacuum pump 110, and a valve 17.

The base plate 11 is a member composing a base of the VL apparatus 10'. Protrusions and dents 11a (see Figs. 10 and 11) are formed on a surface of the base plate 11 contacting the components of the solar cell module in this embodiment. The area of protrusions and dents 11a works as an air-flow bed or layer in a degassing process. The protrusions and dents 11a preferably have a pitch of 0.3 to 0.8 mm and a vertical difference or height of 0.2 to 0.6 mm. The air-flow layer of the protrusions and dents 11a formed on the base plate 11 preserves heat conduction to the components of the solar cell module and achieves enough air flow. the outer periphery of the area of protrusions and dents 11a preferably extends beyond the periphery of the components of a solar cell module to be placed thereon. The area of protrusions and dents 11a in this embodiment extends to the inner edge of the slab-like members 12W as shown in Fig. 11. This structure improves evacuation efficiency of the VL apparatus and contributes to suppress lifting of the cover sheet 14 by means of enhancement of flexural rigidity of the cover sheet 14, which is described later.

Base plate 11 needs heat resistance, rigidity, and light weight in a VL apparatus of this embodiment used for manufacturing a solar cell module. The material for the base plate is principally selected from metals and alloys including iron or aluminum, among which stainless steel is favorable from the view points of ease of fabrication, weldability, and corrosion resistance. While small thickness is desired to reduce heat capacity and weight, since excessively small thickness results in poor rigidity, the thickness is preferably in a range of 0.8 to 2.0 mm.

The evacuation structures 12L are arranged and fixed on the base plate 11 opposing each other on either side of the components of the solar cell module. Both ends of the evacuation structures are sealed by end plates 13. The evacuation structures 12L, like the base plate 11, need heat resistance, rigidity, and light weight. The material used for the evacuation structures can be again stainless steel.

The evacuation structure 12L of this embodiment is a member with approximately triangular cross-section having a face ascending towards the periphery of the base plate 11 at a predetermined angle. As shown in Fig. 10, the evacuation structure consists of first bent face 12La, a second bent face 12Lb, a third bent face 12Lc, a fourth bent face4 12Ld, and a fifth bent face 12Le. Fig. 10 does not show protrusions and dents in the vicinity of the fifth bent face 12Le in order to clearly indicate the fifth bent face.

The second bent face 12Lb is bent at about a right angle from the first bent face 12La. The third bent face 12Lc is bent at a narrow angle of about 30° with respect to the base plate 11. The fourth bent face 12Ld is bent such that a bent edge of the third bent face 12Lc and the fourth bent face 12Ld has a gap with a predetermined distance from the base plate 11. The gap is 2 mm high in this embodiment. In the above described structure of the evacuation structure 12L, the cover sheet 14 gently slopes along the third bent face 12Lc, avoiding an abrupt bend that stresses the cover sheet 14 and might cause cracks in the cover sheet. Thus, productivity of a VL apparatus is improved. The cross-section of the evacuation structure 12L can have a nearly triangular shape that is a trapezoid in which the top edge is modified to a flat surface.

As shown in Fig. 11, the fourth bent face 12Ld is bent from the third bent face 12c leaving a predetermined length of sealing ranges on both sides of the gap, the sealing ranges prohibiting air exhaustion. The sealing range is 10 mm long, for example. The gap produced by such a bend functions as an evacuation port 12h. In the sealing range, the fifth bent face 12Le is bent from the third bent face 12Lc. The fifth bent face 12Le is bent with right angle with respect to the base plate 11. Since the gap is 2 mm in this embodiment, the fifth bent face is also 2 mm high from the base plate.

An evacuation space 12v is formed by the evacuation structure 12L and the base plate 11. The evacuation space 12v evacuates air in the processing space through the evacuation port 12h. An exhaust port 16 is inserted into the evacuation space 12v through the end plate 13 for connection to a vacuum pump 110. In the vacuum lamination process, the air in the processing space sealed by the cover sheet 14 is evacuated through the evacuation port 12h to the evacuation space 12v, from which the air is further evacuated through the exhaust port 16.

The slab-like member 12W works in the vacuum lamination process as a guide to form a bend in the cover sheet 14 at the two peripheral side regions where no evacuation structure 12L is provided. The slab-like member is made of, for example, stainless steel as is the evacuation structure 12L. The slab-like member consists of a first bent face 12Wc and a second bent face 12We, as shown in Fig. 11.

The first bent face 12Wc is bent ascending at a predetermined angle towards the periphery of the base plate 11. The second bent face 12We is bent standing at a right angle from the base plate 11. If the predetermined angle mentioned above is steep or nearly flat with respect to the base plate 11, three dimensional distortions would develop in the cover sheet 14 at a butted corner position formed by the tip of the slab-like member 12W and the evacuation structure 12L. Slack would be generated in the cover sheet 14 around this position causing air leakage. Accordingly, the predetermined angle is favorably determined so that the first bent face 12Wc is appropriately gently sloping with respect to the base plate 11. This predetermined angle is about 30° in this embodiment. The height of the second bent face 12We is preferably in the range of 2 to 3 mm for avoiding the three dimensional distortion of the cover sheet 14. In this embodiment, this height is 2 mm that allows joining with the fifth bent face 12Le of the evacuation structure 12L.

The slab-like member 12W is butted to the base plate 11 so that the second bent face 12We is perpendicular to the base plate 11. Each end of the slab-like member 12W is butted to the evacuation structure 12L such that the first bent face 12Wc and the second bent face 12We of the slab-like member meet the third bent face 12Lc and the fifth bent face 12Le of the evacuation structure, respectively.

These butted parts are spot-welded by TIG welding. The first bent face 12La of the evacuation structure 12L is butted with the outer periphery of the base plate 11 and spot-welded at every 100 mm by means of electric resistance welding, for example. Joining by the spot welding prevents welding distortion and makes the welding time short, thus reducing manufacturing cost of the VL apparatus.

Every spot-welded joint is sealed with sealant for avoiding leakage in the evacuation process. Sealing is made with the silicone sealant "KE45" in this embodiment (the same as in the first embodiment). Sealant adhesion portions are preferably degreased before the adhesion process. The airtight structure using sealant material allows avoiding difficult hermetic welding, and thus, reduces manufacturing cost while ensuring reliability of the VL apparatus.

The end plates 13 seal off both ends of the evacuation structures 12L. The end plates 13 in this embodiment are spot-welded by TIG welding, and sealed at the joint parts with sealant material. The end plates 13 preferably extend integrally connecting the opposing evacuation structures 12L to ensure rigidity of the VL apparatus 10'. Alternatively, end portions of the base plate 11 can be bent and used for the end plates. This structure reduces manufacturing steps of the VL apparatus.

The cover sheet 14 is used for covering the components of a solar cell module and generating a processing space, pushing the components towards the base plate 11 while evacuating through the evacuation space 12v, and promoting degassing from the components of the solar cell module.

Accordingly, the cover sheet 14 needs elasticity, heat resistance, flexibility, light weight, and air tightness on evacuation. Elastic material used is principally a silicone resin, for example, a silicone rubber (thickness: 2 mm, hardness: 50 Hs JIS A, general use silicone resin manufactured by Tigers Polymer Corporation). Although fluororubber can be used, silicone resin is superior in flexibility and cost.

Since solar cell modules for use in roofs are becoming longer, the shape of the processing space is oblong. Considering the evacuation efficiency, the opposing evacuation structures 12L for forming evacuation spaces 12v are preferably located on the longer sides of the base plate.

Provided W is the distance between the opposing evacuation ports 12h (see Fig. 10) and L is the length of the evacuation port (see Fig. 11), the relation L ≥ W is preferably satisfied. Since the evacuation spaces 12v are formed on the longer sides of the base plate 11 under this condition, sufficient evacuation is carried out for a vacuum lamination process even though the evacuation spaces 12v are formed only on the opposing two sides. By this means, a vacuum lamination process can be performed on a solar cell module with a long size and a large area (for example, a size of 500 mm x 2,000 mm).

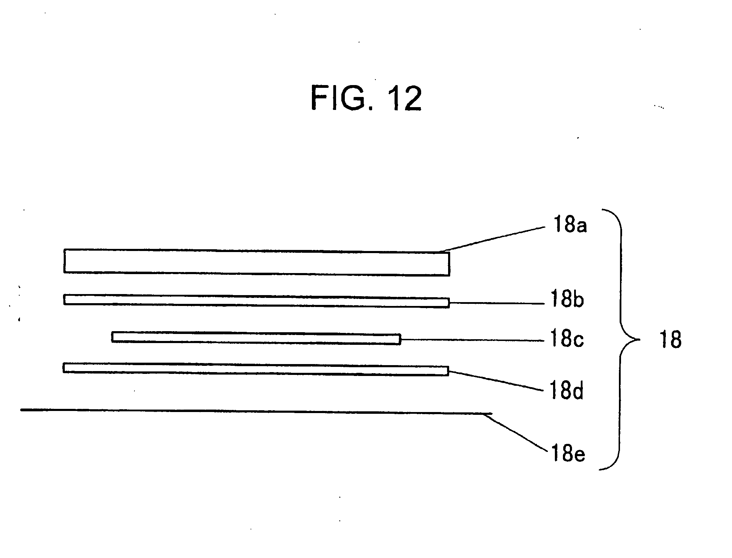

Fig. 12 shows a schematic construction of components of a solar cell module to be processed by vacuum lamination using a VL apparatus according to the invention. The components 18 of a solar cell module to be laminated comprise, from the top to the bottom in the figure, a rear surface reinforcing member 18a, a thermo-adhesive sealant 18b, a photovoltaic element 18c, a thermo-adhesive sealant 18d, and a front surface covering member 18e. A vacuum lamination process in this embodiment is conducted with the light receiving face of the photovoltaic element arranged facing the base plate 11 ("face down" arrangement). Accordingly, the front surface covering member 18e has an outer dimension larger than those of the other components of the solar cell module to prevent the thermo-adhesive sealant 18b and 18d flowing out of the components from adhering to the base plate 11 in the vacuum lamination process. Light from the outside of the thus formed solar cell module enters through the front surface covering member 18e that is a transparent resin film on the outermost surface, and reaches the photovoltaic element 18c. Generated electromotive force is drawn out from output terminals not shown in the figure.

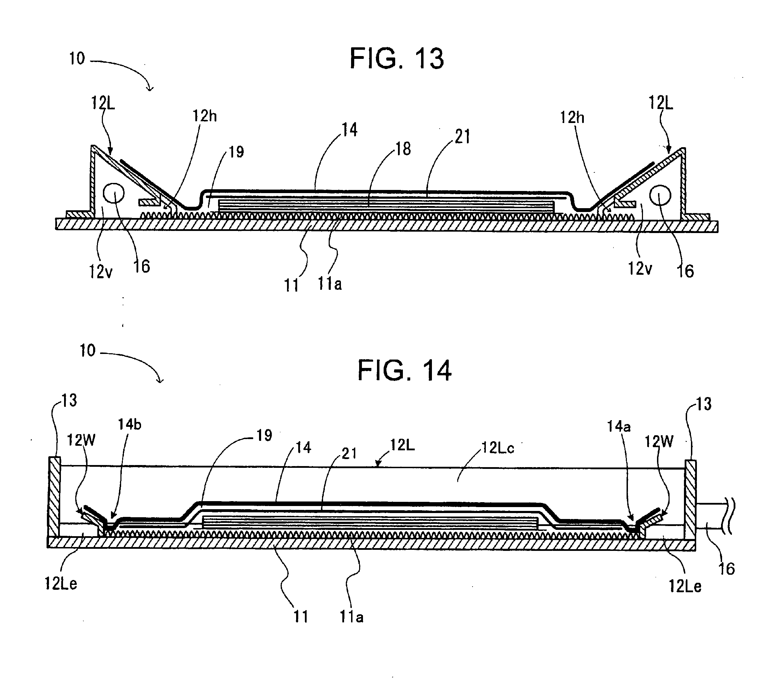

Fig. 13 is a sectional view showing a vacuum lamination process, and Fig. 14 is another sectional view showing the vacuum lamination process. Fig. 13 corresponds to Fig. 10, which shows an A-A cross-section of the VL apparatus 10', and Fig. 14 corresponds to Fig. 11, which shows a B-B cross-section of the apparatus. These figures show a state in which a processing space 19 is formed by covering the components 18 as shown in Fig. 12 of a solar cell module with a cover sheet 14 after arranging the components in a face-down arrangement on the base plate 11.

In the vacuum lamination process, components 18 of a solar cell module are placed on an area of protrusions and dents 11a of the base plate 11. A releasing sheet 21 is placed on the components for preventing the thermo-adhesive sealant 18b and 18d flowing out of the components from adhering to the cover sheet 14. Finally, the cover sheet 14 is put on the materials. In the case of the face-down arrangement, the releasing sheet 21 contacts over the whole surface of the rear surface reinforcing member 18a of the components 18 of the solar cell module. Since the rear surface reinforcing member 18a is made of a material without air permeability such as steel plate, the releasing sheet 21 is not necessarily a material exhibiting air permeability.

After arranging all elements as mentioned above, the vacuum pump 110 starts to evacuate the processing space 19 formed by the cover sheet 14. The cover sheet 14 pushes the components 18 of the solar cell module towards the base plate 11 and promotes degassing air between materials of the components 18. At this time, the protrusions and dents 11a formed on the base plate 11 form an air-flow layer and further promote degassing. While degassing by operating the vacuum pump 110, the components 18 of the solar cell module are heated up to a temperature at which the thermo-adhesive sealant 18b and 18d cures (for example 150°C) and are held at that temperature until completion of the curing (for example, 30 min). Then, the valve 17 is closed and the VL apparatus 10' is cooled while maintaining the vacuum inside the apparatus. Finally, the valve 17 is opened to return the processing space to the atmospheric pressure.

In this vacuum lamination process, both peripheral side regions of the cover sheet 14 at which no evacuation structure is arranged, form bends 14a and 14b by means of the slab-like members 12W as shown in Fig. 14.

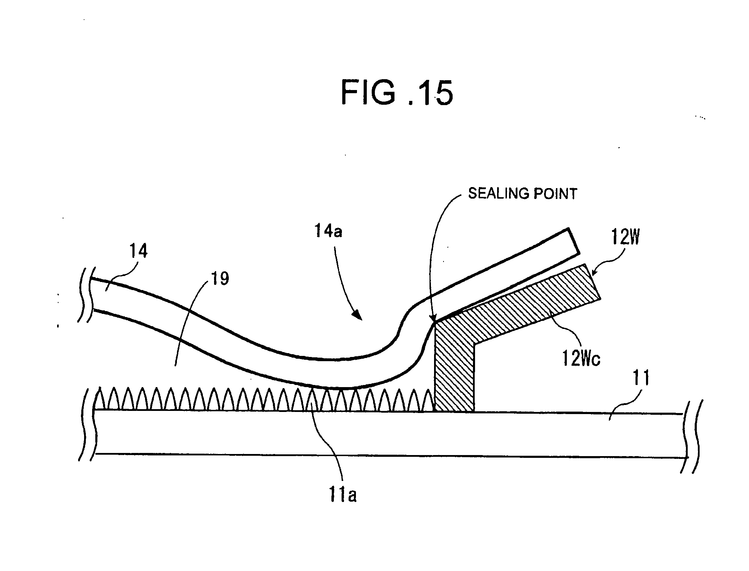

Fig. 15 shows a bend formed at a peripheral side region of the cover sheet. Fig. 15 is an enlarged drawing of the bend 14a in Fig.14. The protrusions and dents 11a formed on the base plate 11 reach the innermost part of the slab-like member 12W in this embodiment, and so, the processing space 19 is evacuated reaching the innermost part of the slab-like member 12W. The cover sheet 14 closely contacts with the slab-like member 12W at the corner (that is the connecting point between the first bent face 12Wc and the second bent face 12We). The close contact point works as a sealing point. Because the sealing point and inner part of the cover sheet are pushed by vacuum differential pressure, the cover sheet 14 is bent at the sealing point formed at the corner of the slab-like member 12W and then ascends along the first bent face 12Wc of the slab-like member 12W. Thus, a bend 14a is formed in the cover sheet 14 and the geometrical moment of inertia of the cover sheet 14 increases.

This enhancement of the geometrical moment of inertia makes the cover sheet 14 exhibiting high flexural rigidity and hard to be bent. Therefore, lifting of the cover sheet at any point along the seal point is sufficiently prevented.

In the following, a solar cell module manufacturing system will be described that employs a VL apparatus of this embodiment of the invention. A schematic construction of a solar cell module manufacturing system that employs a VL apparatus of the second embodiment of the invention is the same as the schematic construction of the manufacturing system employing a VL apparatus of the first embodiment, and shown in Fig. 6.

The VL apparatus 10' arranged in the solar cell module manufacturing system 100 as shown in Fig. 6 shows a sectional view with solar cell module disposed in a processing space and corresponds to the arrangement in Fig. 13. The solar cell module manufacturing system 100 comprises a hot gas convection furnace 101, for example, in which a VL apparatus 10 of this embodiment of the invention as described so far is installed. The solar cell module manufacturing system 100 as shown in Fig. 6 allows manufacturing ten sheets of solar cell modules at one time. Each VL apparatus 10 connects to an exhaust manifold 102 in the furnace 101 through the valve 17 fitted to the exhaust port 16.

In a vacuum lamination process, the vacuum pump 110 starts and the power source of the furnace 101 is switched on to heat the VL apparatus while evacuating a processing space of the apparatus. As described previously, in the VL apparatus 10' in a vacuum lamination process, the both peripheral side regions of the cover sheet 14 are bent by the slab-like member 12W and the geometrical moment of inertia of the cover sheet 14 is enhanced. As a result, lifting of the cover sheet 14 along the seal point is sufficiently suppressed. Therefore, adhesiveness along the seal point of the cover sheet 14 is enhanced and leakage to the processing space 19 is satisfactorily suppressed to accomplish high quality vacuum lamination. The suppression of leakage to the processing space 19 in the VL apparatus 10' of this embodiment allows the degree of vacuum in the processing space 19 to be maintained at 133 Pa (1 Torr), for example.

The protrusions and dents 11a extend to the innermost part of the slab-like member 12W in the structure described above. When the region of protrusions and dents 11a stops before the slab-like member 12W leaving a certain interval, the cover sheet 14 closely contacts with the base plate in the interval creating a seal point. Even in such a case, the slab-like member 12W generates a bend in the peripheral side region of the cover sheet. Accordingly, the geometrical moment of inertia of the cover sheet increases and the adhesiveness of the cover sheet along the seal point is improved to suppress leakage.

The slab-like member 12W is used in the above embodiment as a guide to form a bend in the peripheral side region of the cover sheet 14. However, other types of slab-like member can also be used that have a bend in the cross-section of the member. An end portion of the base plate 11 can be formed to produce such a bent shape as a guide without using any independent member as described above.

Alternatively, a guide for bending the peripheral side region of the cover sheet 14 can be a columnar member having a cross-section protruding from the base plate 11 or a part having a like cross-section formed on the base plate 11. Use of such a type of columnar member heaves the cover sheet 14 from the base plate 11 and generates a bend in the lamination process and increases the geometrical moment of inertia of the cover sheet 14. Examples of such members include a member with a trapezoidal cross-section having a plane ascending towards a periphery of the base plate, and a bar with a round cross-section. The diameter of such a bar with a round cross-section is preferably in the range of 2 to 3 mm for avoiding three dimensional distortion in the cover sheet 14 around a corner at which the end of the bar and the evacuation structure are butted. The bar with a round cross-section leads to lower working cost.

The above description has been made on vacuum lamination process that is conducted in a face-down arrangement of the components 18 of a solar cell module. However, a face-up arrangement can also be taken in the vacuum lamination process. In the face-up arrangement, the releasing sheet 21 is favorably an air permeating material.

A lamination material is not limited to the components 18 of a solar cell module as described above. The VL apparatus can also be applied to the production of other semiconductor devices that need a vacuum lamination process.

## Claims

1. An apparatus for performing a vacuum lamination process on a lamination material comprising:
a base plate (11) for placing the lamination material thereon;
tube like evacuation structures (12) arranged on the base plate (11) along two opposite sides of the base plate (11), the evacuation structures (12) each having an approximately triangular cross-section having an outer side (12b) facing a respective peripheral edge of the base plate (11) and an inner side (12c) facing that of the opposing evacuation structure (12), the outer side (12b) being hermetically fixed to the base plate (11) and the inner side (12c) defining, as an evacuation port, a gap of a constant distance from the base plate (11);
end plates (13) hermetically fixed to the ends of the evacuation structures (12); and
a cover sheet (14) covering the lamination material and the evacuation structures (12) to form a processing space for performing the vacuum lamination process.

2. The apparatus according to claim 1, wherein each of the evacuation structures (12) has a sealing range on the both sides of the gap where said inner side (12c) contacts the base plate (11), the cover sheet (14) extending onto the evacuation structures (12) so as to overlap each sealing range by no less than 2 mm.

3. The apparatus according to claim 1 or 2, wherein said outer side (12b) of the evacuation structures (12) is approximately perpendicular to the base plate (11).

4. The apparatus according to any one of claims 1 to 3, wherein said inner side (12c) of the evacuation structures (12) is inclined to as to ascend towards the respective peripheral edge of the base plate (11) with a predetermined angle.

5. The apparatus according to any one of claim 1 to 4, wherein the evacuation structure (12) and the base plate (11) are fixed together by means of spot welding and hermetically sealed with a sealant material.

6. The apparatus according to any one of claims 1 to 5, wherein a spacer (15) is provided in each gap.

7. The apparatus according to claim 6, wherein the spacers (15) are composed of a wire net.

8. The apparatus according to any one of claims 1 to 7, further comprising:
an air-flow bed for forming an air-flow layer on a surface of the base plate (11), the surface having contact with the lamination material; and
guides arranged along the two opposite sides of the base plate (11) other than those along which the evacuation structures (12L) are arranged, such that each guide bridges the evacuation structures (12L), the evacuation structures (12L) and the guides enclosing a processing area within which the lamination material is to be placed onto said air-flow bed;
wherein said guides are arranged to cause, in response to an evacuation of said processing space, a bend to be formed in each of peripheral edge portions of the cover sheet (14) coextending with the guides.

9. The apparatus according to claim 8, wherein each of the guides (12W) comprises a slab-like member the cross-section of which having a bend.

10. The apparatus according to claim 9, wherein each of the guides (12W) has a first side (12We) arranged perpendicular to the base plate (11) and a second side (12Wc) ascending towards the adjacent peripheral edge of the base plate (11) with a predetermined angle.

11. The apparatus according to claim 8, wherein each of the guides has a columnar shape with a cross-section protruding from the base plate (11) so as to lift the cover sheet (14) from the base plate (11).

12. The apparatus according to claim 11, wherein each of the guides is composed of a bar with a round cross-section.

13. The apparatus according to any one of claims 8 to 12, wherein the air-flow bed extends to edges of the guides (12W).

14. The apparatus according to any one of claims 8 to 13, wherein the air-flow bed is composed of protrusions and dents (11a) formed on the surface of the base plate (11) having contact with the lamination material.

15. The apparatus according to any one of claims 8 to 14, wherein the evacuation structure (12L) has an approximately triangular cross-section and comprises a side (12Lc) ascending towards the respective peripheral edge of the base plate (11) with a predetermined angle.

16. The apparatus according to any one of claims 8 to 15, wherein the base plate (11) and the evacuation structure (12L), the base plate (11) and the guides (12W), and the evacuation structures (12L) and the guides (12W) are joined by spot welding, and each joining part is sealed by sealant material.

17. The apparatus according any one of the preceding claims, wherein the length L of each evacuation port and the distance W between the opposing evacuation ports satisfy L ≥ W.

## Patentansprüche

1. Vorrichtung zur Durchführung eines Vakuumlaminierungsprozesses an einem Laminiermaterial, aufweisend:
eine Grundplatte (11) auf der das Laminiermaterial aufzulegen ist;
rohrartige Abpumpstrukturen (12), die auf der Grundplatte (11) entlang zweier gegenüberliegender Seiten der Grundplatte (11) angeordnet sind, wobei jede der Abpumpstrukturen (12) einen etwa dreieckigen Querschnitt mit einer Außenseite (12b) hat, die einem entsprechenden Umfangsrand der Grundplatte (11) zugewandt ist, und einer Innenseite (12c), die derjenigen der gegenüberliegenden Abpumpstrukturen (12) zugewandt ist, wobei die Außenseite (12b) hermetisch dicht auf der Grundplatte (11) befestigt ist und die Innenseite (12c) als Abpumpanschluss einen Spalt konstanten Abstands von der Grundplatte (11) definiert;
stirnseitige Platten (13), die hermetisch dicht an den Enden der Abpumpstrukturen (12) befestigt sind; und
eine Abdeckfolie (14), die das Laminiermaterial und die Abpumpstrukturen (12) bedeckt, um einen Arbeitsraum zur Durchführung des Vakuumlaminierungsprozesses zu bilden.

2. Vorrichtung nach Anspruch 1, bei der jede der Abpumpstrukturen (12) einen Abdichtbereich an beiden Seiten des Spalts hat, wo die Innenseite (12c) mit der Grundplatte (11) in Kontakt steht, wobei sich die Abdeckfolie (14) bis auf die Abpumpstrukturen (12) erstreckt, um jeden Abdichtbereich um mindestens 2 mm zu überlappen.

3. Vorrichtung nach Anspruch 1 oder 2, bei der die Außenseite (12b) der Abpumpstrukturen (12) in etwa senkrecht zu der Grundplatte (11) ist.

4. Vorrichtung nach einem der Ansprüche 1 bis 3, bei der die Innenseite (12c) der Abpumpstrukturen (12) so geneigt ist, dass sie zum entsprechenden Umfangsrand der Grundplatte (11) unter einem vorgegebenen Winkel ansteigt.

5. Vorrichtung nach einem der Ansprüche 1 bis 4, bei der die Abpumpstrukturen (12) und die Grundplatte (11) mittels Punktschweißen aneinander befestigt und mit einem Dichtmaterial hermetisch abgedichtet sind.

6. Vorrichtung nach einem der Ansprüche 1 bis 5, bei der in jedem Spalt ein Abstandshalter (15) vorgesehen ist.

7. Vorrichtung nach Anspruch 6, bei der die Abstandshalter (15) aus einem Drahtnetz bestehen.

8. Vorrichtung nach einem der Ansprüche 1 bis 7, ferner aufweisend:
ein Luftströmungsbett zum Bilden einer Luftströmungsschicht auf einer Oberfläche der Grundplatte (11), wobei die Oberfläche mit dem Laminiermaterial in Kontakt steht; und
Führungen, die entlang den zwei gegenüberliegenden Seiten der Grundplatte (11), die von den Seiten, entlang derer die Abpumpstrukturen (12L) angeordnet sind, verschieden sind, so dass jede Führung die Abpumpstrukturen (12L) überbrückt, wobei die Abpumpstrukturen (12L) und die Führungen einen Arbeitsraum einschließen, in dem das Laminiermaterial auf das Luftströmungsbett zu legen ist;
wobei die Führungen so angeordnet sind, dass sie als Reaktion auf ein Abpumpen des Arbeitsraums die Bildung einer Krümmung in jedem der Umfangsrandbereiche der Abdeckfolie (14) bewirken, die sich mit den Führungen erstrecken.

9. Vorrichtung nach Anspruch 8, bei der jede der Führungen (12W) ein plattenartiges Element aufweist, dessen Querschnitt eine Krümmung hat.

10. Vorrichtung nach Anspruch 9, bei der jede der Führungen (12W) eine erste Seite (12We) hat, die senkrecht zur Grundplatte (11) angeordnet ist, und eine zweite Seite (12Wc), die unter einem vorgegebenen Winkel zum benachbarten Umfangsrand der Grundplatte (11) ansteigt.

11. Vorrichtung nach Anspruch 8, bei der jede der Führungen eine Säulenform hat, deren Querschnitt aus der Grundplatte (11) hervorsteht, um die Abdeckfolie (14) von der Grundplatte (11) abzuheben.

12. Vorrichtung nach Anspruch 11, bei der jede der Führungen aus einem Stab mit einem runden Querschnitt besteht.

13. Vorrichtung nach einem der Ansprüche 8 bis 12, bei der sich das Luftströmungsbett zu den Kanten der Führungen (12W) erstreckt.

14. Vorrichtung nach einem der Ansprüche 8 bis 13, bei der das Luftströmungsbett aus Vorsprüngen und Vertiefungen (11a) besteht, die auf der Oberfläche der Grundplatte (11) ausgebildet sind, die in Kontakt mit dem Laminiermaterial steht.

15. Vorrichtung nach einem der Ansprüche 8 bis 14, bei der die Abpumpstruktur (12L) einen in etwa dreieckigen Querschnitt hat und eine Seite (12Lc) aufweist, die unter einem vorgegebenen Winkel zum entsprechenden Umfangsrand der Grundplatte (11) ansteigt.

16. Vorrichtung nach einem der Ansprüche 8 bis 15, bei der die Grundplatte (11) und die Abpumpstruktur (12L), die Grundplatte (11) und die Führungen (12W) und die Abpumpstrukturen (12L) und die Führungen (12W) mittels Punktschweißen verbunden sind und jeder Verbindungsteil mit einem Dichtmaterial abgedichtet ist.

17. Vorrichtung nach einem der vorigen Ansprüche, bei der die Länge L jedes Abpumpanschlusses und der Abstand W zwischen gegenüberliegenden Abpumpanschlüssen die Bedingung L ≥ W erfüllt.

## Revendications

1. Dispositif pour effectuer une opération de lamination sous vide sur un matériau de lamination comprenant :
une plaque (11) de base pour y placer le matériau de lamination ;
des structures (12) de mise sous vide analogues à un tube disposées sur la plaque (11) de base le long de deux côtés opposés de la plaque (11) de base, des structures (12) de mise sous vide ayant chacune une section transversale à peu près triangulaire ayant un côté (12b) extérieur faisant face à un bord périphérique respectif de la plaque (11) de base et un côté (12c) intérieur faisant face à celui de la structure (12) de mise sous vide opposée, le côté (12b) extérieur étant fixé hermétiquement à la plaque (11) de base et le côté (12c) intérieur définissant, sous la forme d'une orifice de mise sous vide, un intervalle d'une distance constante à la plaque (11) de base ;
des plaques (13) d'extrémité, fixées hermétiquement aux extrémités des structures (12) de mise sous vide ; et
une feuille (14) de couverture, recouvrant le matériau de lamination et les structures (12) de mise sous vide pour former un espace de traitement pour effectuer l'opération de lamination sous vide.

2. Dispositif suivant la revendication 1, dans lequel chacune des structures (12) de mise sous vide a une étendue d'étanchéité sur les deux côtés de l'intervalle où le côté (12c) intérieur entre en contact avec la plaque (11) de base, la feuille (14) de couverture s'étendant sur les structures (12) de mise sous vide de manière à chevaucher chaque étendue d'étanchéité sur pas moins de 2 mm.

3. Dispositif suivant la revendication 1 ou 2, dans lequel le côté (12b) extérieur des structures (12b) de mise sous vide est à peu près perpendiculaire à la plaque (11) de base.

4. Dispositif suivant l'une des revendications 1 à 3, dans lequel le côté (12c) intérieur des structures (12) de mise sous vide est incliné de manière à s'élever vers le bord périphérique respectif de la plaque (11) de base suivant un angle déterminé à l'avance.

5. Dispositif suivant l'une quelconque des revendications 1 à 4, dans lequel la structure (12) de mise sous vide et la plaque (11) de base sont fixées ensemble au moyen d'un soudage par points et scellées hermétiquement par un matériau de scellement.

6. Dispositif suivant l'une quelconque des revendications 1 à 5, dans lequel une entretoise (15) est prévue dans chaque intervalle.

7. Dispositif suivant la revendication 6, dans lequel les entretoises (15) sont composées d'un grillage.

8. Dispositif suivant l'une des revendications 1 à 7, comprenant en outre :
un lit à écoulement d'air pour former une couche à écoulement d'air sur une surface de la plaque (11) de base, la surface ayant un contact avec le matériau de lamination ; et
des guides disposés le long des deux côtés opposés de la plaque (11) de base autres que ceux le long desquels les structures (12L) de mise sous vide sont disposées de façon à ce que chaque guide chevauche les structures (12L) de mise sous vide, les structures (12L) de mise sous vide et les guides enfermant une zone de traitement, dans laquelle le matériau de lamination peut être placé sur le lit à écoulement d'air ;
dans lequel les guides sont disposés pour faire que, en réaction à une mise sous vide de l'espace de traitement, une courbure soit formée dans chacune des parties de bord périphérique de la feuille (14) de recouvrement de même étendue que le guide.

9. Dispositif suivant la revendication 8, dans lequel chacun des guides (12W) comprend un élément analogue à une barre, dont la section transversale à une courbure.

10. Dispositif suivant la revendication 9, dans lequel chacun des guides (12w) a un premier côté (12We) perpendiculaire à la plaque (11) de base et un deuxième côté (12Wc) s'élevant vers le bord périphérique adjacent de la plaque (11) de base suivant un angle déterminé à l'avance.

11. Dispositif suivant la revendication 8, dans lequel chacun des guides à une forme en colonne ayant une section transversale faisant saillie de la plaque (11) de base, de manière à soulever la feuille (14) de couverture de la plaque (11) de base.

12. Dispositif suivant la revendication 11, dans lequel chacun des guides est composé d'une barre ayant une section transversale circulaire.

13. Dispositif suivant l'une quelconque des revendications 8 à 12, dans lequel le lit à écoulement d'air s'étend vers des bords des guides (12W).

14. Dispositif suivant l'une quelconque des revendications 8 à 13, dans lequel le lit à écoulement d'air est composé de saillies et de dents (11a) formés sur la surface de la plaque (11) de base ayant un contact avec le matériau de lamination.

15. Dispositif suivant l'une quelconque des revendications 8 à 14, dans lequel la structure (12L) de mise sous vide a une section transversale à peu près triangulaire et comprend un côté (12Lc) s'élevant vers le bord périphérique respectif de la plaque (11) de base suivant un angle déterminé à l'avance.

16. Dispositif suivant l'une quelconque des revendications 8 à 15, dans lequel la plaque (11) de base et la structure (12L) de mise sous vide, la plaque (11) de base et les guides (12W), et les structures (12L) de mise sous vide et les guides (12W) sont réunis par soudage par points, et chaque partie de jonction est rendue étanche par un matériau d'étanchéité.

17. Dispositif suivant l'une quelconque des revendications précédentes, dans lequel la longueur L de chaque orifice de mise sous vide et la distance W entre les orifices opposés de mise sous vide satisfait à L ≥ W.
